# EUROPEAN PATENT SPECIFICATION

(11) **EP 2 727 873 B1**
(45) Date of publication and mention of the grant of the patent: **28.03.2018**
(21) Application number: 13382446.6
(22) Date of filing: 05.11.2013
(51) Int. Cl.: B66B 5/00

(54) **Testing method and installation for testing remote alarm systems in elevators**
Testverfahren und Vorrichtung zum Testen von Fernalarmsystemen in Fahrstühlen
Procédé de test et installation pour tester des systèmes d'alarme à distance dans des ascenseurs

(30) Priority: 05.11.2012 ES 201231684
(43) Date of publication of application: 07.05.2014
(73) Proprietor: ORONA, S. COOP., 20120 Hernani (Guipuzcoa) (ES)
(72) Inventor: Sanchez Jimènez, Eneko, 20120 HERNANI (Guipúzcoa) (ES); San Sebastian Peña, Aitor, 20120 HERNANI (Guipúzcoa) (ES)
(74) Representative: Carpintero Lopez, Francisco

(56) References cited:
- GB-A- 2 072 138
- JP-A- 2006 264 810
- JP-A- 2008 056 442
- US-A- 4 930 604

## Description

### Object of the Invention

The present invention relates to the elevator sector, and more specifically to verification and safety processes, systems or devices of said elevators.

The main object of the present invention is a testing method and installation for testing remote alarm systems in elevators, fundamentally standing out for allowing a quick, efficient and thorough testing of the correct operation of the alarm system of elevators, said test being independent of the model and/or manufacturer of the alarm system or elevator.

### Background of the Invention

Currently, it is known that at least all elevators which are manufactured and installed must have a remote alarm system which allows dealing with and rescuing people trapped in elevators. More specifically, said alarm system allows the trapped person to have two-way verbal communication and permanent contact with a rescue service.

On the other hand, during periodic preventive maintenance operations it is necessary for the maintenance technician to verify the correct operation of all the functional elements which can form part of the remote alarm system, namely:
- Alarm equipment
- Alarm initiation devices
- Communications network
- Visible car signals
- Audio devices
- Identification of the installation by the rescue service

Generally, the simplest and most direct way of testing consists of simulating an alarm call and comparing each of the operating parameters of the alarm system of the elevator with a human operator of the control centre. However, this method is very costly economically speaking, since it forces substantially increasing the human resources necessary, taking into account the large amount of elevators there are today.

On the other hand, alarm equipment having a "test mode" operating mode which facilitates identifying the alarm call as a test call, allowing a different processing in the control centre, even diverting it to an automatic process in which the intervention of a human operator of the control centre is not necessary are currently known.

Likewise it is known the Japanese patent application JP2008056442 which describes a telephone call inspection system of elevator. This system is configured to perform the inspection work of a telephone set installed in a car efficiently without burdening both an operator and a person in charge of maintenance at a remote monitoring center.

The technical problem proposed herein is that the aforementioned alarm equipment, having an operating "test mode", require a specific activation for each manufacturer and even for each model of alarm equipment from the same manufacturer. This is complex and confusing for elevator maintenance companies when verifying the correct operation of each of the different alarm systems, leading to considerable losses both in time and costs since the technician must first of all know the way of activating the "test mode" of each model and/or manufacturer of alarm equipment.

### Description of the Invention

The aforementioned technical problem is solved by means of the present invention, providing a testing method and installation for testing remote alarm systems in elevators which allow performing a quick, efficient and thorough testing of alarm systems incorporated in elevators, said test being completely independent of the model and/or manufacturer of the alarm system to be tested, providing the method and the installation described herein with a universal character, valid for any elevator equipped with a remote alarm system, and making it possible to carry out said test without requiring a human operator responding to alarm calls, the maintenance technician being however always necessary.

More particularly, the testing method object of the invention is especially applicable for elevators incorporating alarm systems comprising at least one piece of alarm equipment, an alarm initiating device, a communications network and audio devices.

Therefore, the testing method described herein fundamentally stands out for comprising the following phases: a) initiating an alarm call from an alarm initiating device of an elevator to a call receiving equipment; b) initiating a predetermined time countdown after initiating the alarm call; c) playing a message recognisable to a speech recognition system within said time countdown; d) verifying if the message played is a valid message by means of the speech recognition system; e) diverting the alarm call to a check test for testing the correct operation of the alarm system of the elevator in the event that the message played is a valid message.

Preferably, the message played in step c) is a sound message pre-recorded in a portable electronic device such as a mobile telephone device, portable computer, PDA, tablet or the like. Furthermore, said message is preferably a code formed by letters and/or numbers.

With respect to the speech recognition system, also mentioned in step c), it is foreseen that this can be integrated in the call receiving equipment, in the alarm equipment, or in an independent device connected to both equipment (call receiving equipment and alarm equipment). Furthermore, said system is more preferably an Automatic Speech Recognition (ASR) system, which stands out because of its resistance to outside noise, ample vocabulary, precision and speed.

Likewise, in relation to step d), it is worth pointing out that the message played is considered a valid message if it coincides in each of its digits or parameters with a secret key stored in the speech recognition system.

On the other hand, it is worth pointing out that the check test mentioned in step e) is suitable for verifying and testing the correct operation of at least the functional elements of the aforementioned alarm system: alarm equipment, alarm initiating devices, communications network and audio devices.

Lastly, it is worth pointing out that in the event that the message sent in step c) is identified as an invalid message, i.e., it does not exactly match the secret key of the speech recognition system, or no message is produced, therefore this situation being that of a person who is indeed trapped (stuck elevator, blocked doors, etc.), then the alarm call is transferred to a human operator who will deal with the person immediately, as is traditionally done in current systems.

According to another object of the invention, a testing installation for testing remote alarm systems in elevators is described below, said test being performed according to the method described above, said alarm system comprising an alarm equipment, at least one alarm initiating device, a communications network, visible car signals and audio devices (microphone and speaker). More specifically said installation comprises: a call receiving equipment connected to the alarm system of an elevator; a speech recognition system suitable for recognising and verifying messages sent from the elevator; and a check test for testing the correct operation of the alarm system of the elevator and to which the alarm calls are diverted in the event that the message sent to the speech recognition system is a valid message.

### Description of the Drawings

To complement the description that is being made and for the purpose of aiding to better understand the features of the invention according to a preferred practical embodiment thereof, a set of drawings is attached as an integral part of said description in which the following has been depicted in an illustrative and non-limiting manner:

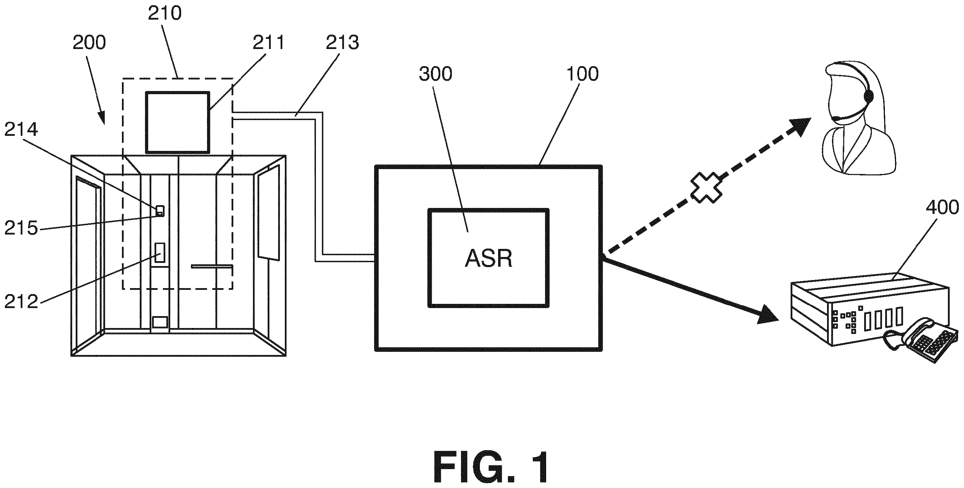

Figure 1 shows a schematic view where the testing installation for testing remote alarm systems in elevators object of the invention can be seen.

### Preferred Embodiment of the Invention

Several preferred embodiments referring to the above mentioned figure are described below, without limiting or reducing the scope of protection of the present invention.

According to a first preferred embodiment, the testing method for testing remote alarm systems (210) in elevators (200) comprises:
a) initiating an alarm call from an alarm initiating device (212) of an elevator (200) to a call receiving equipment (100),
b) initiating a predetermined time countdown after initiating the alarm call,
c) playing or reproducing a message recognisable to a speech recognition system (300) within said time countdown,
d) verifying if the message played is a valid message by means of the speech recognition system (300),
e) diverting the alarm call to a check test (400) for testing the correct operation of the alarm system (210) of the elevator (210) in the event that the message played is a valid message.

Figure 1 shows a schematic view of the testing installation for testing a remote alarm system (210) in an elevator (200), said alarm system (210) comprising an alarm equipment (211), an alarm initiating device (212), a communications network (213), visible car signals (214) and audio devices (215), said installation fundamentally standing out for comprising:
- a call receiving equipment (100) connected to the alarm system (210) of the elevator (200), and suitable for handling alarm information and maintaining two-way communication,
- a speech recognition system (300), an ASR system in the present embodiment, suitable for recognising and verifying messages sent from the elevator (200), and
- a check test (400) for testing the correct operation of the alarm system (210) of the elevator (200) and to which the alarm calls are diverted in the event that the message sent to the speech recognition system (300) is a valid message.

It is worth pointing out at this point that it has been foreseen that said check test (400) can be assisted by a machine (automatic), or assisted by a human operator.

Therefore, preventing the need of requiring a human operator responding to alarm calls is achieved by means of the method and installation described herein as reflected in said Figure 1 for those cases in which only the maintenance tasks and testing of the alarm system (210) of elevators (200) are performed by a maintenance technician, who will always be necessary. Incurring additional costs is thus prevented, in addition to said test being performed quickly, efficiently and thoroughly, and for any type or model of elevator (200) equipped with an alarm system (210).

On the other hand, according to a second preferred embodiment, the testing method for testing remote alarm systems in elevators is based on the fact that all the alarm calls made during a pre-established period of time to a call receiving equipment (100) are diverted to a check test (400).

Therefore, according to a first variant of this second preferred embodiment, the pre-established period of time is activated by means of sending an SMS text message from a portable electronic device to an additional receiver equipment linked to the call receiving equipment (100). It is worth pointing out that said additional receiver equipment is specifically suitable for receiving, processing and reading short SMS text messages.

On the other hand, according to a second variant, said pre-established period of time is activated by means of a missed call made from the communications network (213) of the elevator (200) to the call receiving equipment (100).

It is worth indicating at this point that both the SMS text message and the missed call made from the communications network (213) of the elevator (200) preferably include a unique identifier, such that it is possible to obtain the exact address of the building where the elevator (200) is located, as well as the reference number of said elevator (200), once said identifier has been checked against a data base of the call receiving equipment (100).

Lastly, according to a third variant of said second preferred embodiment, the pre-established period of time is activated by means of an actuator connected to the alarm system of the elevator. Furthermore, it has been foreseen that said actuator can comprise a device selected from: a rotary key, a magnetic switch, an electromechanical sensor and an RFID sensor.

Lastly, it is worth pointing out that in the three abovementioned variants of the second preferred embodiment, the pre-established period of time can be deactivated at any time through the same mechanism used for activating it, whether it is an SMS, a missed call or an actuator.

## Claims

1. Testing method for testing remote alarm systems (210) in elevators (200), said alarm system (210) being of the types which comprise at least one piece of alarm equipment (211), an alarm initiating device (212), a communications network (213), and audio devices (215), said testing method being **characterised in that** it comprises the following steps:
a) initiating an alarm call performed by a maintenance technician from the alarm initiating device (212) of the elevator (200) to a call receiving equipment (100),
b) initiating a predetermined time countdown after initiating the alarm call,
c) playing a message recognisable to a speech recognition system (300) within said time countdown,
d) verifying if the message sent is a valid message by means of the speech recognition system (300), and
e) diverting the alarm call to a check test (400) for testing the correct operation of the alarm system (210) of the elevator (200) in the event that the message sent is a valid message
and wherein the alarm call is transferred to a human operator responding to alarm calls in the event that the message played is identified as an invalid message.

2. Testing method according to claim 1, **characterised in that** the message played in step c) is a sound message pre-recorded in a portable electronic device.

3. Testing method according to any one of the preceding claims, **characterised in that** the message played is a code comprising letters and/or numbers.

4. Testing method for testing remote alarm systems (210) in elevators (200), said alarm system (210) being of the types which comprise at least one piece of alarm equipment (211), an alarm initiating device (212), a communications network (213) and audio devices (215), said testing method being **characterised in that** all the alarm calls made by a maintenance technician during a pre-established period of time to a call receiving equipment (100) are diverted to a check test (400).

5. Testing method according to claim 4, **characterised in that** the pre-established period of time is activated by means of sending an SMS text message from a portable electronic device to an additional receiver equipment, linked to the call receiving equipment (100).

6. Testing method according to claim 4, **characterised in that** the pre-established period of time is activated by means of a missed call made from the communications network (213) of the elevator (200) to the call receiving equipment (100).

7. Testing method according to any one of claims 5 or 6, **characterised in that** the SMS text message or the missed call made from the communications network (213) of the elevator (200) include a unique identifier which allows obtaining the identification information of said elevator (200).

8. Testing method according to claim 4, **characterised in that** the pre-established period of time is activated by means of an actuator connected to the alarm system (210) of the elevator (200).

9. Testing method according to claim 8, **characterised in that** the actuator comprises a device selected from:
- a rotary key,
- a magnetic switch,
- an electromechanical sensor, and
- an RFID sensor.

10. Testing method according to any one of claims 5, 6 or 8, **characterised in that** the pre-established period of time can be deactivated at any time through the same mechanism used for activating it, whether it is an SMS, a missed call or an actuator.

11. Testing method according to any one of claims 1 or 4, **characterised in that** the check test (400) verifies the correct operation of at least the following functional elements of the alarm system (210):
- alarm equipment (211)
- alarm initiating devices (212),
- communications network (213), and
- audio devices (215).

12. Testing method according to any one of claims 1 or 4, **characterised in that** the check test (400) is assisted by a machine.

13. Testing method according to any one of claims 1 or 4, **characterised in that** the check test (400) is assisted by a human operator.

14. Testing installation for testing remote alarm systems (210) in elevators (200), said test being performed by means of the method described in any one of claims 1 to 4, said alarm system (210) comprising at least one piece of alarm equipment (211), an alarm initiating device (212), a communications network (213) and audio devices (215), said installation being **characterised in that** it comprises:
- a call receiving equipment (100) connected to the alarm system (210) of an elevator (200),
- a speech recognition system (300) suitable for recognising and verifying messages sent from the elevator (200), and
- a check test (400) for testing the correct operation of the alarm system (210) of the elevator (200) and to which the alarm calls are diverted in the event that the message sent to the speech recognition system (300) is a valid message.

## Patentansprüche

1. Testverfahren zum Testen von Fernalarmsystemen (210) in Fahrstühlen (200), wobei das Alarmsystem (210) zu denjenigen gehört, die mindestens ein Teil eines Alarmgeräts (211), eine Alarmauslösevorrichtung (212), ein Kommunikationsnetzwerk (213) und Audiogeräte (215) umfassen, wobei das Testverfahren **dadurch gekennzeichnet ist, dass** es die folgenden Schritte umfasst:
a) Einleiten eines durch einen Wartungstechniker ausgeführten Alarmrufs von der Alarmauslösevorrichtung (212) des Fahrstuhls (200) zu einem Anrufempfangsgerät (100),
b) Einleiten eines vorbestimmten Zeit-Countdowns nach dem Einleiten des Alarmrufs,
c) Abspielen einer Nachricht, die für ein Spracherkennungssystem (300) innerhalb des Zeit-Countdowns erkennbar ist,
d) Verifikation mittels des Spracherkennungssystems (300), ob die gesendete Nachricht eine gültige Nachricht ist, und
e) Umleiten des Alarmrufs zu einer Kontrollprüfung (400) zum Testen des korrekten Betriebs des Alarmsystems (210) des Fahrstuhls (200), falls die gesendete Nachricht eine gültige Nachricht ist,
und wobei der Alarmruf an einen auf Alarmrufe reagierenden menschlichen Bediener weitergeleitet wird, falls die abgespielte Nachricht als eine ungültige Nachricht identifiziert wird.

2. Testverfahren gemäß Anspruch 1, **dadurch gekennzeichnet, dass** die in Schritt c) abgespielte Nachricht eine vorab in einem tragbaren elektronischen Gerät aufgezeichnete Tonnachricht ist.

3. Testverfahren gemäß einem der vorhergehenden Ansprüche, **dadurch gekennzeichnet, dass** die abgespielte Nachricht ein Code ist, der Buchstaben und/oder Zahlen umfasst.

4. Testverfahren zum Testen von Fernalarmsystemen (210) in Fahrstühlen (200), wobei das Alarmsystem (210) zu denjenigen gehört, die mindestens ein Teil eines Alarmgeräts (211), eine Alarmauslösevorrichtung (212), ein Kommunikationsnetzwerk (213) und Audiogeräte (215) umfassen, wobei das Testverfahren **dadurch gekennzeichnet ist, dass** alle Alarmrufe, die während einer vorbestimmten Zeitspanne von einem Wartungstechniker an ein Anrufempfangsgerät (100) getätigt werden, zu einer Kontrollprüfung (400) umgeleitet werden.

5. Testverfahren gemäß Anspruch 4, **dadurch gekennzeichnet, dass** die voreingestellte Zeitspanne aktiviert wird, indem eine SMS-Textnachricht von einem tragbaren elektronischen Gerät an ein zusätzliches Empfangsgerät gesendet wird, das mit dem Anrufempfangsgerät (100) verbunden ist.

6. Testverfahren gemäß Anspruch 4, **dadurch gekennzeichnet, dass** die voreingestellte Zeitspanne mittels eines verpassten Anrufs aktiviert wird, der von dem Kommunikationsnetzwerk (213) des Fahrstuhls (200) zu dem Anrufempfangsgerät (100) getätigt wird.

7. Testverfahren gemäß einem der Ansprüche 5 oder 6, **dadurch gekennzeichnet, dass** die SMS-Textnachricht oder der von dem Kommunikationsnetzwerk (213) des Fahrstuhls (200) getätigte verpasste Anruf eine eindeutige Kennung enthalten, die es ermöglicht, die Identifikationsinformation des Fahrstuhls (200) zu erhalten.

8. Testverfahren gemäß Anspruch 4, **dadurch gekennzeichnet, dass** die voreingestellte Zeitspanne mittels eines Aktuators aktiviert wird, der mit dem Alarmsystem (210) des Fahrstuhls (200) verbunden ist.

9. Testverfahren gemäß Anspruch 8, **dadurch gekennzeichnet, dass** der Aktuator eine Vorrichtung umfasst, die ausgewählt ist aus:
- einem Drehschlüssel,
- einem Magnetschalter,
- einem elektromechanischen Sensor und
- einem RFID-Sensor.

10. Testverfahren gemäß einem der Ansprüche 5, 6 oder 8, **dadurch gekennzeichnet, dass** die voreingestellte Zeitspanne jederzeit durch den gleichen Mechanismus deaktiviert werden kann, der für ihre Aktivierung verwendet wird, sei es eine SMS, ein verpasster Anruf oder ein Aktuator.

11. Testverfahren gemäß einem der Ansprüche 1 oder 4, **dadurch gekennzeichnet, dass** die Kontrollprüfung (400) den korrekten Betrieb mindestens der folgenden Funktionselemente des Alarmsystems (210) verifiziert:
- Alarmgerät (211)
- Alarmauslösevorrichtungen (212),
- Kommunikationsnetzwerk (213) und
- Audiogeräte (215).

12. Testverfahren gemäß einem der Ansprüche 1 oder 4, **dadurch gekennzeichnet, dass** die Kontrollprüfung (400) von einer Maschine unterstützt wird.

13. Testverfahren gemäß einem der Ansprüche 1 oder 4, **dadurch gekennzeichnet, dass** die Kontrollprüfung (400) von einem menschlichen Bediener unterstützt wird.

14. Testinstallation zum Testen von Fernalarmsystemen (210) in Fahrstühlen (200), wobei der Test mittels des in einem der Ansprüche 1 bis 4 beschriebenen Verfahrens durchgeführt wird, wobei das Alarmsystem (210) mindestens ein Teil eines Alarmgeräts (211), eine Alarmauslösevorrichtung (212), ein Kommunikationsnetzwerk (213) und Audiogeräte (215) umfasst, wobei die Installation **dadurch gekennzeichnet ist, dass** sie Folgendes umfasst:
- ein Anrufempfangsgerät (100), das mit dem Alarmsystem (210) eines Fahrstuhls (200) verbunden ist,
- ein Spracherkennungssystem (300), das geeignet ist, vom Fahrstuhl (200) gesendete Nachrichten zu erkennen und zu verifizieren, und
- eine Kontrollprüfung (400) zum Prüfen des korrekten Betriebs des Alarmsystems (210) des Fahrstuhls (200), und zu dem die Alarmrufe umgeleitet werden, falls die an das Spracherkennungssystem (300) gesendete Nachricht eine gültige Nachricht ist.

## Revendications

1. Procédé de test pour tester des systèmes (210) d'alerte à distance dans des ascenseurs (200), le système (210) d'alerte étant des types qui comprennent au moins une pièce d'un équipement (211) d'alerte, un dispositif (212) de lancement d'une alerte, un réseau (213) de communications et des dispositifs (215) audio, le procédé de test étant **caractérisé en ce qu'**il comprend les stades suivants :
a) lancement d'un appel d'alerte effectué par un technicien d'entretien d'un dispositif (212) de lancement d'une alerte de l'ascenseur (200) à un équipement (100) de réception d'un appel,
b) lancement d'un compte à rebours déterminé à l'avance après le lancement de l'appel d'alerte,
c) jeu d'un message reconnaissable vers un système (300) de reconnaissance vocale dans le laps de temps du compte à rebours,
d) vérification si le message envoyé est un message valable au moyen du système (300) de reconnaissance vocale et
e) envoi de l'appel d'alerte à un test (400) de vérification pour tester le fonctionnement correct du système (210) d'alerte de l'ascenseur (200) dans le cas où le message envoyé est un message valable
et dans lequel l'appel d'alerte est transféré à un opérateur humain répondant à des appels d'alerte dans le cas où le message envoyé est identifié comme un message non valable.

2. Procédé de test suivant la revendication 1, **caractérisé en ce que** le message joué au stade c) est un message sonore préenregistré dans un dispositif électronique portable.

3. Procédé de test suivant l'une quelconque des revendications précédentes, **caractérisé en ce que** le message joué est un code comprenant des lettres et/ou des nombres.

4. Procédé de test pour tester des systèmes (210) d'alerte à distance dans des ascenseurs (200), le système (210) d'alerte étant des types, qui comprennent au moins une pièce d'un équipement (211) d'alerte, un dispositif (212) de lancement d'une alerte, un réseau (213) de communications et des dispositifs (215) audio, le procédé de test étant **caractérisé en ce que** tous les appels d'alerte faits par un technicien d'entretien pendant une durée établie à l'avance à un équipement (100) de réception d'un appel sont envoyés à un test (400) de vérification.

5. Procédé de test suivant la revendication 4, **caractérisé en ce que** la durée établie à l'avance est activée au moyen d'un envoi d'un message de texte SMS d'un dispositif électronique portable à un équipement de récepteur supplémentaire relié à l'équipement (100) de réception d'un appel.

6. Procédé de test suivant la revendication 4, **caractérisé en ce que** la durée établie à l'avance est activée au moyen d'un appel manqué fait du réseau (213) de communications de l'ascenseur (200) à l'équipement (100) de réception d'un appel.

7. Procédé de test suivant l'une quelconque des revendications 5 ou 6, **caractérisé en ce que** le message de texte SMS ou l'appel manqué fait à partir du réseau (213) de communications de l'ascenseur (200) comprend un identificateur unique, qui permet d'obtenir l'information d'identification de l'ascenseur (200).

8. Procédé de test suivant la revendication 4, **caractérisé en ce que** la durée établie à l'avance est activée au moyen d'un actionneur relié au système (210) d'alerte de l'ascenseur (200).

9. Procédé de test suivant la revendication 8, **caractérisé en ce que** l'actionneur comprend un dispositif choisi parmi :
- une clé tournante,
- un interrupteur magnétique,
- un capteur électromagnétique et
- un capteur RFID.

10. Procédé de test suivant l'une quelconque des revendications 5, 6 ou 8, **caractérisé en ce que** la durée établie à l'avance peut être désactivée à n'importe quel moment par le même mécanisme que celui utilisé pour l'activer, que ce soit un SMS, un appel manqué ou un actionneur.

11. Procédé de test suivant l'une quelconque des revendications 1 ou 4, **caractérisé en ce que** le test (400) de vérification vérifie le fonctionnement correct d'au moins l'un des éléments fonctionnels suivant du système (210) d'alerte :
- équipement (211) d'alerte,
- dispositif (212) de lancement d'une alerte,
- réseau (213) de communications et
- dispositif (215) audio.

12. Procédé de test suivant l'une quelconque des revendications 1 ou 4, **caractérisé en ce que** le test (400) de vérification est assisté par une machine.

13. Procédé de test suivant l'une quelconque des revendications 1 ou 4, **caractérisé en ce que** le test (400) de vérification est assisté par un opérateur humain.

14. Installation de test pour tester des systèmes (210) d'alerte à distance dans des ascenseurs (200), le test étant effectué au moyen du procédé décrit dans l'une quelconque des revendications 1 à 4, le système (210) d'alerte comprenant au moins une pièce d'un équipement (211) d'alerte, un dispositif (212) de lancement d'une alerte, un réseau (213) de communications et des dispositifs (215) audio, l'installation étant **caractérisée en ce qu'**elle comprend :
- un équipement (100) de réception d'un appel relié au système (210) d'alerte d'un ascenseur (200),
- un système (300) de reconnaissance vocale propre à reconnaître et à vérifier des messages envoyés depuis l'ascenseur (200) et
- un test (400) de vérification pour tester le fonctionnement correct du système (210) d'alerte de l'ascenseur (200) et auquel les appels d'alerte sont envoyés dans le cas où le message envoyé au système (300) de reconnaissance vocale est un message valable.
